Europäisches Patentamt

European Patent Office

Office européen des brevets

(11) Publication number: 0 667 386 A1

## EUROPEAN PATENT APPLICATION
### published in accordance with Art. 158(3) EPC

(21) Application number: 94914253.3

(22) Date of filing: 02.11.92

(86) International application number: PCT/RU92/00194

(87) International publication number: WO 94/10261 (11.05.94 94/11)

(51) Int. Cl.⁶: C10G 15/00

(43) Date of publication of application:
16.08.95 Bulletin 95/33

(84) Designated Contracting States:
AT BE CH DE DK ES FR GB GR IT LI LU NL SE

(71) Applicant: KLADOV, Anatoly Fedorovich
ul. Universalnaya, 6-34
Novosibirsk, 630057 (RU)

(72) Inventor: KLADOV, Anatoly Fedorovich
ul. Universalnaya, 6-34
Novosibirsk, 630057 (RU)

(74) Representative: W.P. Thompson & Co.
Coopers Building,
Church Street
Liverpool L1 3AB (GB)

(54) PROCESS FOR CRACKING CRUDE OIL AND PETROLEUM PRODUCTS AND A DEVICE FOR CARRYING OUT THE SAME.

(57) The proposed process involves subjecting the liquid, raw material to ultrasound treatment in a closed-circulation system, the intensity of the ultrasound being set a 1-10 MW/m². Between 0.1 and 80 vol % of a dispersing agent is introduced into the treatment area at the same time as the raw material; it sustains static pressure of between 0.2 and 5 MPa. The device used in carrying out this process contains an ultrasonic activator which generates ultrasound at an intensity of 1-10 MW/m² and is connected to an appliance (19) for separating the liquid and vapour phases of the processed crude, and a device (27) for condensing the end product.

FIG. 1

Technical Field

The present invention relates in general to petroleum processing and more specifically to a process and a unit for cracking petroleum and petroleum products.

Background Art

One prior-art petroleum thermal cracking process is now in widespread use (cf. "Concise handbook for petroleum processor" by M.G.Rudin and A.Ye.Drabkin, Khimia Publishers, Leningrad, 1980, pp. 65 - 67 (in Russian), said process being aimed at producing an additional amount of white petroleum products by thermal decomposition (pyrolysis) of petroleum refining residues. The process includes the following main operations: preheating the raw stock to 470 - 540°C at a pressure of 2.2 - 2.8 MPa; fractionation of petroleum vapors at 210 - 500°C and a pressure of 0.8 - 2.5 MPa. In addition, the process incorporates such auxiliary operations as cooling-condensing and separation. Used as the raw stock are residues of the primary petroleum processing, such as residual fuel oil having an initial boiling point above 350°C, oil tar with a boiling point above 500°C, and heavy coker and catalytic gas oils having a boiling point above 420°C.

The end products of the known process are as follows: gas containing saturated and unsaturated hydrocarbons which are forwarded for further processing to gas-fractionating plants; gasoline having a motor-method octane number of 66 - 72, a sulfur content of up to 0.5 - 1.2 wt.%, and a content of unsaturated hydrocarbons (alkenes and alkene-dienes) of up to 25 wt.%; kerosene-gas-oil fraction which is a valuable component of marine fuel oil also applicable, after having been desulfurized, as a diesel-fuel component; and heavy residual stock used as a boiler fuel oil.

The yield of the thermal cracking products, in terms of averaged characteristics, is as follows: hydrocarbon-containing gas, 2.3 - 3.5 %; stabilizer overhead, 3.0 - 3.6 %; gasoline, 6.7 - 19.7 %; kerosene-gas-oil fraction, 3.9 - 5.3 %; and heavy residual stock, 68 - 88 %.

Specific energy consumption in the aforesaid thermal consumption process per ton of the raw stock is as follows:

| steam, GJ | 0.4 - 0.6; |
|---|---|
| electric power, GJ | 0.03 - 0.04; |
| water, cu.m | 20 - 30; |
| fuel, GJ | 1.4 - 2.1. |

The quality of a process is most often assessed by the yield of the most valuable end products, energy consumption, processing cost, and loss of raw stock in the course of processing. Thermal cracking process enables the yield of white liquid petroleum products to be attained at a level of 9 - 30 % (assumed as white petroleum products are those boiling out at a temperature below 350°C), specific total energy consumption being 1.8 - 2.7 MJ/kg, processing cost, 0.5 - 2.5 rbl/kg, and loss of raw stock, 2 - 4 %. These are very low characteristics, therefore the aforediscussed process has virtually gone out of practical use and almost everywhere been ousted by the catalytic cracking process which, though being more efficient, is also more expensive and complicated for practical realization.

There is extensively art-renowned nowadays the catalytic cracking process (cf. op. cit., pp. 70 - 73), that is, the process of thermal decomposition of heavy petroleum fractions in the presence of catalyst.

The process includes the following operations: preheating the raw stock to 470 - 500°C at a static pressure of 0.06 - 0.24 MPa; mixing the raw stock with steam, then with the catalyst; treatment of the resultant mixture of the raw stock, steam, and catalyst in a reaction vessel, wherein catalytic decomposition of the raw stock occurs; separation into a liquid and a vapor phase; catalyst extraction; fractionation of a mixture of hydrocarbons at a temperature of up to 500°C and a pressure of 0.06 - 0.24 MPa; catalyst regeneration at 590 - 670°C and a pressure of 0.2 - 0.24 MPa. Cooling, condensing, and some other operations are used auxiliary ones.

Used as the raw stock for catalytic cracking most frequently is a vacuum distillate having a boiling point of its fractions lying within 350 and 500°C, and some other hydracarbons.

The end products of the catalytic cracking process are as follows:
- hydrocarbon gas containing 80 - 90 % of saturated and unsaturated hydrocarbons $C_3$ - $C_4$;
- gasoline fraction with a final boiling point of 195°C used as the component of motor and aviation gasoline having a research octane number of 87 - 93 and the following hydrocarbon content, wt.%:

aromatic, 20 - 30; unsaturated, 8 - 15; naphthene-series hydrocarbons, 7 - 15; and paraffin hydrocarbons, 45 - 50;

- light gas oil with a boiling point of 195 - 280 °C used as the component of diesel-oil and gas-turbine fuel;
- fraction having a boiling point of 280 - 420 °C used for producing raw stock for commercial carbon production;
- heavy gas oil having a boiling point above 420 °C used as the component of boiler fuel oil.

The yield of the catalytic cracking products, in terms of averaged characteristics, is as follows;

| | |
|---|---|
| hydrocarbon-containing gas | 6 - 10 |
| stabilizer head (light liquid hydrocarbons) | 8 - 10 |
| gasoline | 28 - 43 |
| light gas oil | 13 - 18 |
| 280-420 °C fraction | 10 - 15 |
| heavy gas oil | 12 - 16 |
| burning-out coke | 5.3 - 5.5 |

Specific energy consumption of the catalytic cracking process is as follows (per ton of raw stock):

| | |
|---|---|
| steam, GJ | 0.5 - 0.8; |
| electric power, GJ | 0.3 - 0.4; |
| water, cu.m | 4 - 5; |
| fuel GJ | 0.4 - 0.5; |
| catalyst, kg | 1 - 1.2. |

Catalytic cracking process allows of producing white petroleum products at a level of 54 - 78 %, specific total energy consumption being 1.2 - 1.8 MJ/kg, processing cost, 0.75 - 3.75 rbl/kg, and loss of raw stock, 7 - 10 % (loss of burnt-out coke inclusive).

As compared with thermal cracking the catalytic cracking process features the yield of white petroleum products more than twice as high, energy consumption is reduced by about 50%, though the processing cost and loss of raw stock are somewhat increased.

Moreover, the process fails to provide a higher yield of white petroleum products, which is concerned with limited activity and selectivity of catalysts used in the cracking process.

Standard commonly known units are used for carrying the aforementioned processes into effect.

A unit for catalytic cracking of petroleum products comprises a raw-stock processing device communicating with a device for isolating the end products of the process, said device communicating with a device for cooling and condensing the end product (e.g., gasoline), which in turn communicates with a device for separating hydrocarbon gases from the liquid (gasoline).

The raw stock processing device is essentially a vessel accommodating either a dense fixed-bed or moving-bed macrospheroidal cracking catalyst, or else a fluidized-bed microspheroidal cracking catalyst, wherein the raw stock under processing is brought, in a vapor phase, in contact with the catalyst, and the reaction of splitting hydrocarbon molecules takes place.

The end products isolation device appears as a separation column accommodating a cascade of separating trays. The reaction gas and gasoline vapors are taken overhead the column through a pipe and are then directed to the cooling and condensing device, whereas the termination petroleum products featuring a higher boiling point than gasoline, e.g., kerosene, diesel-oil, and some other fractions are taken off the separating trays. Taken off the bottom of the column is the unsplit products, that is, cracking residue or bottoms.

The cooling and condensing device is in fact a heat-exchanger of any construction, e.g., a shell-and-tube one.

The gas-liquid separating device is a vessel having part of its interior space filled with a separating mixture. A gas outlet is provided in the top portion of the device, and a liquid outlet, in the bottom portion thereof.

Application of said catalytic cracking unit allows one to obtain a yield of white petroleum products at a level of 54 - 78 % as has been stated before.

However, to further increase the yield of white petroleum products is impossible because the construction in question fails to intensify the chemical-engineering processes conducted in the raw stock being processed.

Disclosure of the Invention

The present invention has for its principal object to provide a process for cracking petroleum and petroleum products involving such a processing of the raw stock, and a unit for carrying said process into effect featuring such a construction arrangement of the raw-stock processing device that enable one to attain as high yield of white petroleum products as 90%, or more.

The foregoing object is accomplished due to the provision of a process for cracking petroleum and petroleum products, comprising feeding the raw stock to the processing zone, processing of said raw stock at a static pressure, followed by separating the thus-processed raw stock into a liquid phase and a vapor phase, and obtaining the end product from the vapor phase, wherein, according to the invention, the raw stock is subjected to ultrasonic treatment in the processing zone with a radiation intensity of 1 - 10 MW/sq.cm, and a static pressure is maintained in a range of 2.0 to 5.0 MPA, a closed recirculation circuit being established in the processing zone, to which are fed, concurrently with the raw stock, also a dispersant in an amount of 0.1 - 80 vol.%, and a liquid phase resulting from the separation of the processed raw stock.

Use of ultrasonic radiation having the intensity stated above makes it possible to build up a variable pressure in the liquid under processing, said pressure consisting of alternating half-cycles of compression (positive pressure) and rarefaction (negative pressure). During the rarefaction half-cycle cavitation bubbles arise and grow up. The instant of time when the bubbles appear is determined by a balance between the sound wave negative pressure and the tensile strength of the liquid. Reduction in the tensile strength of the liquid is due to the presence of minute particles, dissolved gases, and radicals therein. The thus-formed cavitation bubbles distend under the action of the negative pressure and get filled with the vapors of the surrounding liquid and the gases dissolved therein. During the compression half-cycle the cavitation bubbles fall under the action of the positive pressure and start contracting. In the course of bubble contraction the diametrically opposite areas of the inner surface of a cavitation bubble move towards each other to collide at the end of contraction at a point with a definite collapsing rate. As a result, some energy is released, the amount of which is directly proportional to the mass of the flowing liquid multiplied by the square of its flow velocity. When the amount of energy released during collapsing of a cavitation bubble exceeds the atomic bond energy in the molecule, the bond is cleaved.

The aforementioned processes are practicable only with the sound intensity not less than 1 MW/sq.m or over, at which a noticeable raw stock decomposition occurs. With the sound intensity below the aforestated minimum value, the positive effect is badly affected since nonlinear effects are the impetus of ultrasonic processes. The upper boundary of said range is limited to the engineering capabilities of modern ultrasonics.

The energy efficiency of cavitation bubbles is increased due to application of a static pressure in the aforesaid range, which at the same time prevents an excess growth of bubbles and increases the speed at which the bubble walls move towards each other during bubble collapsing. The pressure level within said range is directly proportional to the boiling point of the desired end product because said temperature determines the pressure of the end product saturated vapors. When the static pressure is below the pressure of saturated vapors, the ultrasonic cracking process ceases. On the other hand, when the static pressure exceeds the sum of the pressure of saturated vapors and that of the sound wave, no cavitation bubble may arise, and the cracking process discontinues, too.

The cracking process occurs in a cavitation bubble which functions most efficiently at a liquid medium temperature of 100 - 200°C. The desired end product is isolated from a mixture of the raw stock and intermediate products by their boiling-point separation. The energy required for preheating the mixture to the end product boiling point is released as the side-product concurrently with the cracking process.

In order to increase the sound density and propagation velocity, as well as to add to the number of cavitation bubbles, fed to the processing zone concurrently with the raw stock to be processed is a dispersant in an amount of 0.1 - 80 vol.%.

Insofar as the cracking process occurs in a cavitation bubble and the volume of bubbles forming per unit time in the processing zone cannot be in excess of 0.1 the total volume of the liquid flowing through the processing zone, since there is a necessity of returning, for reprocessing, the liquid that has passed through the processing zone but not turned into the vapor phase during the separation process, that is, of carrying out a continuous liquid circulation along a closed recirculation circuit.

As a result of performing the aforementioned operations the attainable yield of white petroleum products can be as high as 90% and more.

It is favorable that fed as a dispersant to the processing zone simultaneously with the raw stock is water in an amount of 0.1 - 80 vol.%, or a liquid metal (50 - 80 vol%) having a melting point below the boiling point of the desired end product.

The ultrasonic treatment process results in that there are formed from a mixture of the raw stock and water a water-in-oil emulsion when a small amount of water is added (up to 60 vol.%), or an oil-in-water emulsion in the case of a greater amount of water (up to 80 vol.%). In such cases the number of cavitation bubbles formed exceeds that of bubbles formed in a straight homogeneous liquid, whereby the yield of the end products is increased.

When the amount of water exceeds 60 vol.% water becomes the dispersion medium having higher density and sound propagation velocity, whereby the radiation intensity and the yield of the end product are in this case increased.

With the water content below 0.1 vol.% the aforesaid mechanism of increasing the yield of the end product ceases to function, since in this case water in a dissolved state and hence does not form an emulsion. With the water content above 80 vol.% the yield of the end product is likewise reduced due to a decreased amount of the raw stock in the processing zone.

Used as the dispersion water can be a liquid metal, featuring the product of the density by the sound propagation velocity is higher than in petroleum and petroleum products and hence the radiation intensity and the end product yield are higher, too. When the amount of metal in the recirculation circuit is below 50%, the yield of the end product decreases due to the fact that the amount of metal is insufficient for establishing a continuous dispersion medium so that an advantage of a higher density and a greater sound propagation velocity of metal disappear. With the amount of metal in the recirculation circuit above 80% the yield of the end product also decreases due to a reduced raw stock concentration in the emulsion.

It is expedient that gaseous hydrogen in an amount of 2 - 3 wt.% be fed to the processing zone concurrently with the raw stock.

When a long-chain raw-stock molecule is cleaved, free bonds result, to which hydrogen atoms are to be attached for stabilization of the end product. Up to four unsaturated bonds form in the various combinations of hydrocarbons contained in petroleum products and resulting from the cracking process. With an average molecular weight of the end product equal to 100 wt.%, 2 wt.% of hydrogen is required on the average. When the amount of hydrogen fed is below 2 wt.%, the end product contains more unsaturated, aromatic, naphthene hydrocarbons, whereby the quality of the liquid white petroleum products is affected adversely. When the amount of hydrogen fed exceeds 3 wt.%, the yield of the end product is reduced due to breakage of the cavitation process.

Thus, practical application of the herein-proposed process for cracking petroleum and petroleum products provides for conducting such chemical-engineering processes in the original liquid raw stock that enable one to increase the yield of white petroleum products up to 90% and more.

The foregoing object of the invention is also accomplished due to the provision of a unit for carrying into effect the process for cracking petroleum and petroleum products, said unit comprising a raw-stock processing device communicating with an end-products isolating device, and wherein, according to the invention, the raw-stock processing device is in fact an ultrasonic activator having a housing accommodating at least two intercommunicating working chambers, each of said chambers accommodating a rotor set on a drive shaft and being in fact the impeller of a centrifugal pump, said impeller having at its outlet a ring rigidly fixed thereto and provided with holes for the raw stock under processing to pass, and a stator which is in fact a ring provided with holes for the raw stock under processing to pass, said stator ring being rigidly fixed in the activator housing opposite to the rotor ring, the width of the holes in the rotor ring being equal to the width of the holes in the stator ring, and a total area of the holes in the rotor ring is equal to a total area of the holes in the stator ring and makes up 0.1 to 0.7 the area of the inlet of the corresponding impeller, while the spacing of the holes in the rotor ring and the spacing of the holes in the stator ring equals 2 to 2.25 the width of said holes; the first of said working chambers having an inlet pipe connector, and the working chambers intercommunicate through diffusers interconnecting the outlet of the preceding impeller to the inlet of the next impeller, while the outlet of the last impeller is connected to the inlet of the first impeller through a diffuser provided with a flow restrictor and an outlet pipe connector interposed between the flow restrictor and the last impeller so as to establish communication between the ultrasonic activator and the end-products isolating device, which is in fact the device for separating the processed raw stock into a liquid phase and a vapor phase, and the device for condensing the vapor phase.

Use of the ultrasonic activator of the aforesaid construction as the raw-stock processing device allows of simultaneously generating an ultrasonic radiation having an intensity up to 1 MW/sq.m and more, and treating the raw stock passing along the device with said radiation. The effect of ultrasonic radiation of said intensity on the raw stock under processing has been described hereinbefore. Generation of ultrasonic radiation and raw-stock processing are carried out consecutively in a number (at least two) working chambers intercommunicating through diffusers. With such an intercommunication the processing intensity increases as the raw stock advances over the device, whereby the yield of the end product increases and its quality is enhanced. The aforesaid effect is augmented also due to the fact that the last working chamber communicates with the first working chamber through a diffuser provided with a flow restrictor so that part of the raw stock can be subjected to multiply repeated processing in a closed recirculation circuit.

Under such conditions the cleaved chemical bonds of hydrocarbons contained in petroleum products are either saturated with hydrogen which can be fed directly during the cracking process of the liquid under processing, or they establish closed rings of cyclic (naphthene) or aromatic hydrocarbons. In the latter case unbound hydrogen is formed which can be used for saturating the vacant bonds of paraffin hydrocarbons resulting in formation of isomers, which contributes to stability in producing hydrocarbons and adds to the yield of white petroleum products.

Furthermore, large-size cavitation bubbles are formed during the ultrasound generation process, which have not managed to collapse and thus dissipate energy in the form of heat. Said energy, which is in fact the energy lost during the ultrasound generation process, is utilized in the device for preheating the ultrasound-treated raw stock to the boiling point of the desired end product. Utilized for the same purpose are all other kinds of energy that have not been used for the preset purpose, e.g., cleavage of chemical bonds between the atoms of hydrocarbon molecules. Said saved energy is utilized for isolating white petroleum products, thus increasing the yield thereof.

It is expedient that the diffusers interconnecting the outlet of the preceding impeller with the inlet of the next impeller be of the vaned and/or scroll (volute) type.

Sound intensity is directly proportional to the square of the amplitude of the vibration rate of the liquid under processing flowing through the holes in the rotor and stator. The liquid flow velocity depends on the pressure (energy) differential built up by the impeller. The lower amount of energy is lost by the liquid while passing along the passages of the device the higher will the sound intensity. The aforesaid construction of the diffusers makes it possible to considerably reduce hydraulic loss and eventually to enhance the sound intensity and hence increase the yield of the end products.

With the purpose of performing a more intense and complete cracking process involving lower heat losses, it is desirable that the appliance for separating the processed medium be enclosed in the housing of the ultrasonic activator past the last working chamber and appear as a separating chamber, one of the end walls of the housing of said chamber having tangential pasages communicating the chamber with the last working chamber, a total area of said passages equalling 1 - 1.3 the total area of the holes in the ring of the rotor of the last working chamber, while the central portion of the opposite end wall of said chamber a passage is provided, aimed at discharging the resultant vapor phase, said passage communicating with an appliance for condensing said vapor phase, while the outlet pipe connector which communicates, through a diffuser provided with a flow restrictor, the outlet of the last impeller with the inlet of the first impeller, is to be located in the wall of the peripheral portion of said separating chamber.

It is likewise expedient that the vapor phase condensing device be enclosed in the housing of the ultrasonic activator past the separating chamber and appear as a cooling chamber having one of its end walls provided with a central passage communicating said chamber with the separating chamber and having a diameter that equals 0.5 - 1.5 the inlet diameter of the impeller of the last working chamber, while a pipe connector for the liquid end product to discharge is provided in the opposite end wall of the cooling camber in the peripheral portion thereof.

In order to reduce losses of sound and heat energy it is expedient that the external surface of the ultrasonic activator housing be coated with a layer of a sound- and heat-insulating material.

Saving of sound and heat energy results in a higher sound intensity and hence in a higher yield of white petroleum products.

Thus, practical application of the proposed unit allows of attaining as high yield of the desired petroleum products as 90% and more.

The herein-proposed process for cracking petroleum and petroleum products is carried into effect as follows.

Liquid raw stock is fed to the ultrasonic activator which provides for ultrasonic processing with a radiation intensity of 1 - 10 MW/sq.m.

A static pressure in the range of from 2.0 to 5.0 MPa (depending on the desired end product) is established and maintained in the processing zone by appropriately adjusting the rate of feed and discharge of the liquid under processing.

As a result of the aforesaid ultrasonic treatment the raw stock is heated to a temperature equal to or somewhat above the boiling point of the desired end product. The required energy is released during the cracking process. Thereupon the processed raw stock is separated into a liquid and a vapor phase. To this end, e.g., the ultrasonic-treated raw stock is fed to the separator, where the desired end product is let to evaporate at its boiling point and is thus separated from the rest of the liquid, which is withdrawn from the separator and refed to the ultrasonic activator for additional ultrasonic treatment. Thus, the raw stock processing occurs in a closed recirculation circuit. The end product in the vapor phase is discharged from the separator and is fed to the condenser, wherein the vapor is condensed into liquid which is discharged as the desired end product.

To attain higher sound density and velocity of propagation in the liquid under processing and to form a larger number of cavitation bubbles, fed to the processing zone simultaneously with the raw stock is a substance capable of dispersing the latter, said substance (dispersant) being fed in an amount of 0.1 - 80 vol.%. Used as said dispersant may be water (0.1 - 80 vol.%), or a liquid metal (50 - 80 vol.%) having a melting point below the boiling point of the desired end product.

A variable pressure is developed in the liquid under processing during ultrasonic treatment thereof with the aforesaid radiation intensity, said pressure consisting in alternating compression and rarefaction half-cycles. During the rarefaction half-cycle cavitation bubbles arise and grow up. The instant of time when the bubbles appear is determined by a balance between the sound wave negative pressure and the tensile strength of the liquid. Reduction in the tensile strength of the liquid is due to the presence of minute particles, dissolved gases, and radicals therein. The thus-formed cavitation bubbles distend under the action of the negative pressure and get filled with the vapors of the surrounding liquid and the gases dissolved therein. During the compression half-cycle the cavitation bubbles fall under the action of the positive pressure and start contracting. In the course of bubble contraction the diametrically opposite areas of the inner surface of a cavitation bubble move towards each other to collide at the end of contraction at a point with a definite collapsing rate. As a result, some energy is released, the amount of which is directly proportional to the mass of the flowing liquid multiplied by the square of its flow velocity. When the amount of energy released during collapsing of a cavitation bubble exceeds the atomic bond energy in the molecule, the bond is cleaved. The aforementioned processes are practicable only with the sound intensity not less than 1 MW/sq.m or over, at which a noticeable raw stock decomposition occurs. With the sound intensity below the aforestated minimum value, the positive effect is badly affected since nonlinear effects are the impetus of ultrasonic processes. The upper boundary of said range is limited to the engineering capabilities of modern ultrasonics.

The energy efficiency of cavitation bubbles is increased due to application of a static pressure in the aforesaid range, which at the same time prevents an excess growth of bubbles and increases the speed at which the bubble walls move towards each other during bubble collapsing. The pressure level within said range is directly proportional to the boiling point of the desired end product because said temperature determines the pressure of the end product saturated vapors. When the static pressure is below the pressure of saturated vapors, the ultrasonic cracking process ceases. On the other hand, when the static pressure exceeds the sum of the pressure of saturated vapors and that of the sound wave, no cavitation bubble may arise, and the cracking process discontinues, too.

The cracking process occurs in a cavitation bubble which functions most efficiently at a liquid medium temperature of 100 - 200°C. The desired end product is isolated from a mixture of the raw stock and intermediate products by their boiling-point separation. The energy required for preheating the mixture to the end product boiling point is released as the side-product concurrently with the cracking process.

Insofar as the cracking process occurs in a cavitation bubble and the volume of bubbles forming per unit time in the processing zone cannot be in excess of 0.1 the total volume of the liquid flowing through the processing zone, since there is a necessity of returning, for reprocessing, the liquid that has passed through the processing zone but not turned into the vapor phase during the separation process, that is, of carrying out a continuous liquid circulation along a closed recirculation circuit.

When water is fed simultaneously with the raw stock to the processing zone in an amount of 0.1 - 80 vol.%, the ultrasonic treatment process results in that there are formed from a mixture of the raw stock and water a water-in-oil emulsion when a small amount of water is added (up to 60 vol.%), or an oil-in-water emulsion in the case of a greater amount of water (up to 80 vol.%). In such cases the number of cavitation bubbles formed exceeds that of bubbles formed in a straight homogeneous liquid, whereby the yield of the end products is increased. When the amount of water exceeds 60 vol.% water becomes the dispersion medium having higher density and sound propagation velocity, whereby the radiation intensity and the yield of the end product are in this case increased. With the water content below 0.1 vol.% the aforesaid mechanism of increasing the yield of the end product ceases to function, since in this case water in a dissolved state and hence does not form an emulsion. With the water content above 80 vol.% the yield of the end product is likewise reduced due to a decreased amount of the raw stock in the processing zone.

Used as the dispersion water can be a liquid metal, e.g., mercury or Wood's alloy, wherein the product of the density by the sound propagation velocity is higher than in petroleum and petroleum products and hence the radiation intensity and the end product yield are higher, too. When the amount of metal in the recirculation circuit is below 50%, the yield of the end product decreases due to the fact that the amount of metal is insufficient for establishing a continuous dispersion medium so that an advantage of a higher density and a greater sound propagation velocity of metal disappear. With the amount of metal in the recirculation circuit above 80% the yield of the end product also decreases due to a reduced raw stock concentration in the emulsion.

With the purpose of attaining a better quality of the white petroleum products obtained, gaseous hydrogen in an amount of 2 - 3 wt.% may be fed to the processing zone concurrently with the raw stock.

When a long-chain raw-stock molecule is cleaved, free bonds result, to which hydrogen atoms are to be attached for stabilization of the end product. Up to four unsaturated bonds form in the various combinations of hydrocarbons contained in petroleum products and resulting from the cracking process. With an average molecular weight of the end product equal to 100 wt.%, 2 wt.% of hydrogen is required on the average. When the amount of hydrogen fed is below 2 wt.%, the end product contains more unsaturated, aromatic, naphthene hydrocarbons, whereby the quality of the liquid white petroleum products is affected adversely. When the amount of hydrogen fed exceeds 3 wt.%, the yield of the end product is reduced due to breakage of the cavitation process.

Thus, practical application of the herein-proposed process for cracking petroleum and petroleum products provides for conducting such chemical-engineering processes in the original liquid raw stock that enable one to increase the yield of white petroleum products in excess of 90%.

Brief Description of the Drawings

To promote understanding of the present invention given below are some specific exemplary embodiments thereof with reference to the accompanying drawings, wherein:

FIG.1 is a schematic cross-sectional view of a unit for cracking petroleum and petroleum products, according to the invention;

FIG.2 shows the area A in FIG. 1;

FIG.3 is a developed view of FIG. 2;

FIG.4 is a section taken on the line IV-IV in FIG. 1;

FIG.5 is a developed view of a section taken on the line V-V in FIG.4;

FIG.6 is a schematic view of an alternative embodiment of the present invention; and

FIG.7 is an alternative embodiment of the unit of FIG.1.

Best Method of Carrying Out the Invention

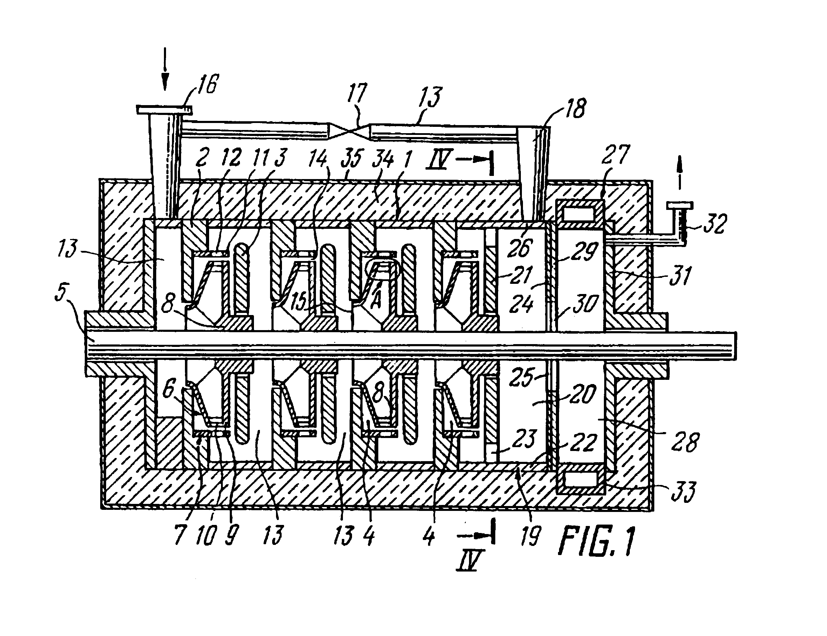

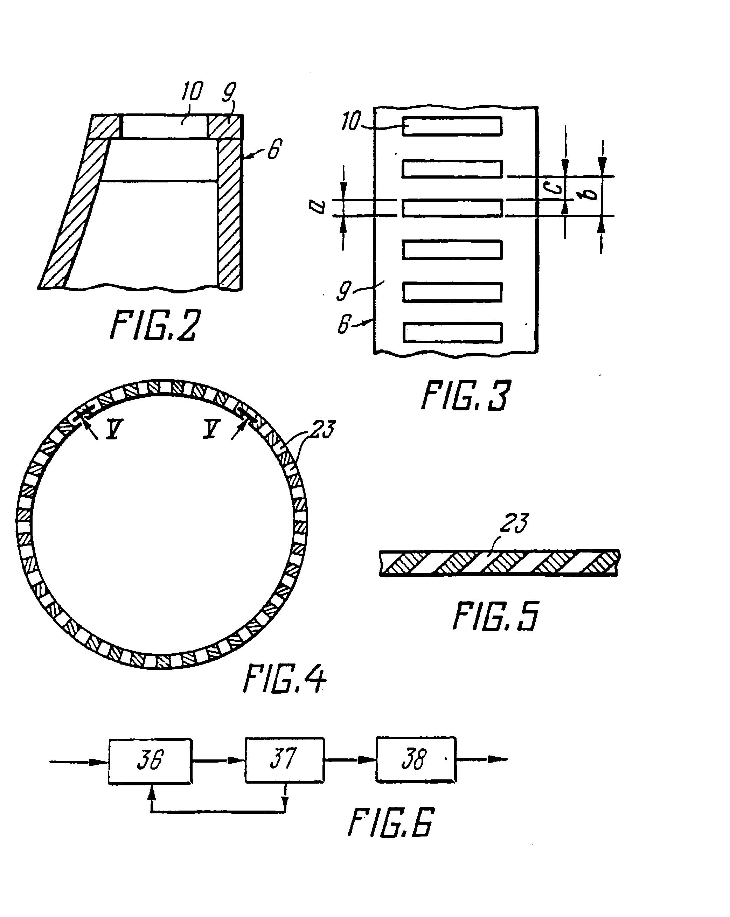

The cracking unit, according to the invention, comprises a raw-stock processing device which appears as an ultrasonic activator having a housing 1 (FIG.1), wherein working chambers 4 are defined by partitions 2 and 3, the number of said chambers depending on the desired end product to be obtained. For instance, to produce gasoline requires more chambers than production of kerosene. FIG.1 illustrates four intercommunicating working chambers 4, each accommodating a rotor 6 set on a drive shaft 5, and a stator 7. Each rotor 6 is essentially a centrifugal pump impeller 8 provided with a ring 9 (FIG.2) rigidly fixed thereto at its outlet and having holes 10 for the raw stock under processing to pass. The ring 9 (FIG.1) can be made integral with the impeller 8. The stator 7 appears also as a ring 11 having holes 12 for the raw stock under processing to pass and rigidly fixed inside the housing 1 of the ultrasonic activator opposite to the ring 9 of the rotor 6.

The width (a) (FIG.3) of each of the holes 10 in the ring 9 of the rotor 6 is equal to the width (a) of each of the holes 12 in the ring 11 of the stator 7. A total area of the holes 10 in the ring 9 of the rotor 6 is equal to a total area of the holes 12 of the stator 7 and makes up 0.1 to 0.7 the inlet area of the corresponding impeller. The spacing (b) of the holes 10 in the ring 9 of the rotor 6 and the spacing (a) of the holes 12 (FIG.1) in the ring 11 of the stator 7 equals 2 to 2.25 the width (a) (FIG.3) of said holes 10 or 12 (FIG.1).

The flow velocity of the liquid under processing is adjusted by appropriately selecting the size of the holes 10, 12 in the rings 9, 11 of the rotor 6 and the stator 7, respectively.

With a view to increasing the sound intensity the liquid flow velocity at the outlet of the holes 10 in the ring 9 of each rotor 6 is increased, because said intensity is in a quadratic relation with the vibration rate (the constant liquid flow being trasformed into the variable one in the course of interaction between the ring 9 of the rotor 6 and the ring 11 of the stator 7). The working pressure developed by one centrifugal pump impeller 8 is within 0.3 and 0.6 MPa on the average. Said pressure is an ultimate one for the preselected value (0.1) of reducing the area of the holes 10, 12 and a proportional increase in the liquid flow velocity. There is no engineering capabilities for a still more increase in the flow velocity (that is, further reduction of the area of the holes 10, 12) when using the devices of medium parameters.

There is commonly known the threshold value of sound intensity at which cavitation is liable to arise in a liquid. A minimum liquid flow velocity is assumed accordingly. When the liquid flow velocity is reduced below the minimum allowable value (with a total area of the holes 10, 12 in the rings 9, 11 of the rotor 6 and the stator 7, respectively), no cavitation arises and the working process ceases.

The spacing (b) (FIG.3) of the holes 10 is equal to the sum of the width (a) of the hole 10 and of the web (c). With the spacing (b) of the holes 10 less than two widths (a) of said holes 10, the width of the web (c) between the holes 10 becomes smaller than the width (a) of the hole 10 itself, and hence the web (c) will not shut up completely the opposite hole 12 (FIG.1) in the ring 11 of the stator 7. This will result in unproductive leakage (losses) of the liquid and affect adversely the intensity of ultrasonic radiation.

With the spacing (b) (FIG.3) of the holes 10 in excess of 2.25 the width (a) of said holes 10, the width of the web (c) becomes much larger than the width (a) of the hole 10 itself, with the result that the opposite hole 12 (FIG.1) in the ring 11 of the stator 7 remains shut up for a majority of the working cycle of the device. As a result, flow resistance of the cascade of the holes 10, 12 increases, while the vibration rate and the sound intensity decrease. Insofar as the liquid flow velocity is associated with the flow resistance of passages, as well as the intensity of ultrasonic radiation is associated with the liquid flow velocity by a quadratic relation, the intensity of ultrasonic radiation varies quadratically with respect to the flow resistance and hence when the spacing (b) (FIG.3) of the holes 10 is in excess of 2.25 the width (a) of said holes 10, the sound intensity is badly reduced.

All stated above holds true for the holes 12 (FIG.1) in the rings 11 of the stator 7.

However, the aforestated ratio between a total area of the holes 10, 12 (FIG.1) in the rings 9, 11 of the rotor 6 and the stator 7, respectively, and the inlet area of the respective impeller 8 is to be used differentially. The larger area of the holes 10 in the ring 9 of the rotor 6 corresponds to the initial impellers 8 from the entrance of the ultrasonic activator, and the smaller area, to the last impellers 8. Smaller webs between the holes 10 in the ring 9 of the rotor 6 corresponds to a larger diameter of the impellers 8 and to a higher rotation speed thereof.

The working chambers intercommunicate through diffusers 13 that connect an outlet 14 of the preceding impeller 8 to an inlet 15 of the next impeller 8. The first working chamber 4 has an inlet pipe connector 16. The outlet 14 of the last impeller 8 is connected to the inlet 15 of the first impeller 8 through the diffuser 13 provided with a flow restrictor 17 and an outlet pipe connector 18 which is interposed between the flow restrictor 17 and the last impeller 8. The diffusers 13 intercommunicating all the working chambers 4 (the last to the first one inclusive) are of the vaned or scroll volute type, or are a combination of both types.

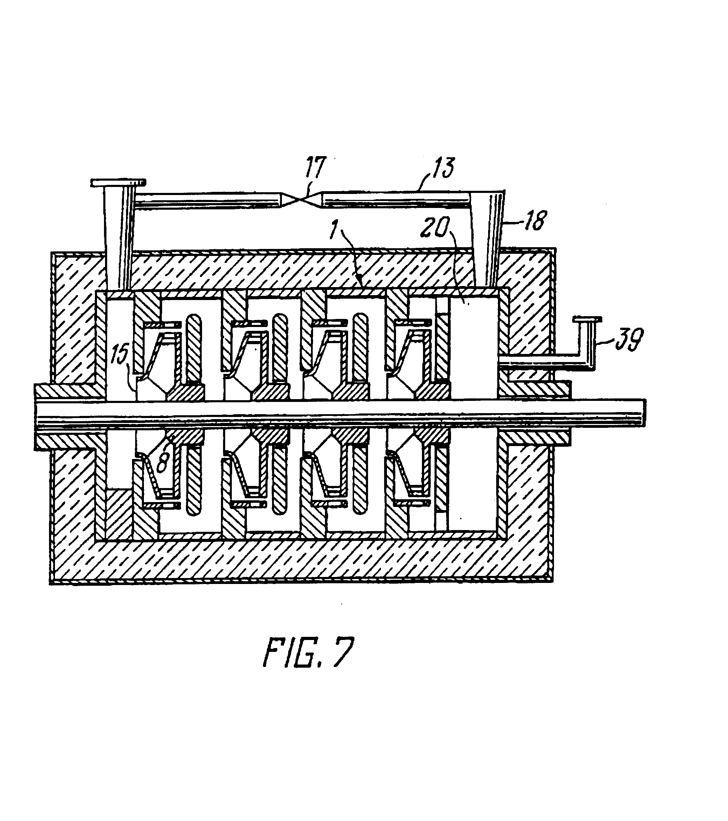

Located past the last working chamber 4 inside the ultrasonic activator housing 1 is a device 19 for separating the processed raw stock, appearing as a separating chamber 20. An end wall 21 of a housing 22 of said separating chamber 20 is provided with tangential passages 23 (FIGS. 4, 5) which communicate said chamber with the last working chamber 4 and serving for converting the translational motion of the processed raw stock into the rotary one. A total area of said passages equals 1 - 1.3 the total area of the holes 10 (FIG.1) in the ring 9 of the rotor 6 of the last working chamber 4.

The central portion of an opposite end wall 24 of said chamber has a passage 25 aimed at discharging the resultant vapor phase. The outlet pipe connector 18 which communicates, through the diffuser 13 provided with the flow restrictor 17, the outlet 14 of the last impeller 8 with the inlet 15 of the first impeller 8, is located in a wall 26 of the peripheral portion of the separating chamber 20.

The liquid is concentrated, under centrifugal forces, in the peripheral portion of the separating chamber 20, while the end product in the form of the vapor phase is accumulated in the central portion of the separating chamber 20. Then the liquid is transferred, through the outlet pipe connector 18 and the diffuser 13 provided with the flow restrictor 17, to the first working chamber for additional processing, while the vapor phase is discharged from the separating chamber 20 through a passage 25 and is forwarded for condensation. Separation of the processed raw stock into the liquid and vapor phases under centrifugal forces occurs in said separating chamber 20 intensely and completely and is accompanied by but little loss of heat, whereby the yield of the end product increases. Reducing the total area of the tangential passages 23 below 1.0 the total area of the holes 10 in the ring 9 of the rotor 6 results in an increased loss of energy during passing of the processed raw stock through said passages 23, a reduced rotation speed of the raw stock in the separating chamber 20, and a decreased yield of the end product. When the total area of the tangential passages 23 exceeds 1.3 the total area of the holes 10 in the ring 9 of the rotor 6, this leads to an increased turbulence of the raw stock radial transfer, adversely affected separation into liquid and vapor, and reduced yield of the end product.

Located past the separating chamber 20 inside the ultrasonic activator housing 1 is a vapor-phase condensing device 27, which is essentially a cooling chamber 28 having one end wall 29 thereof provided with a central passage 30 communicating said chamber with the separating chamber 20. The diameter of the passage 30 equals that of the passage 25 of the separating chamber 20 and makes up 0.5 - 1.5 the diameter of the inlet 15 of the impeller 8 of the last working chamber 4. An opposite end wall 31 located in the peripheral portion of the cooling chamber 28 has an outlet pipe connector 32 for the liquid end product to discharge. Cooled elements 33 are arranged in the side walls of the cooling chamber 28, said elements having any of the heretofore-known constructions suitable for similar purposes.

The vaporous end product rotating in the central portion of the separating chamber 20 flows over, through the central passages 25 and 30, to the cooling chamber 28, wherein it is brought in contact, at a high rate, with the surface of the cooled elements 33 and gets condensed. Thus, total losses of energy concerned with transfer of the vaporous end product over long distances are decreased so that part of energy used for ultrasonic treatment of the raw stock is increased, thus eventually adding to the yield of the end product. When the area of the central passage is less that 0.5 the diameter of the inlet 15 of the impeller 8 of the last working chamber 4, this leads to an increase in flow resistance and a decrease in the yield of the end product. When the area of the central passage 30 exceeds 1.5 the diameter of the inlet 15 of the impeller 8 of the last working chamber 4 results in soiling the end product with the drops of the intermediate product which soar over the surface of the liquid ring rotating in the separating chamber 20.

The outer surface of the entire ultrasonic activator housing 1 accommodating the separating chamber 20 and the cooling chamber 28 is coated with a layer 34 of a sound- and heat-insulating material and closed with a metallic casing 35.

The aforesaid sound- and heat-insulation of the unit is aimed at reducing the losses of sound and heat energy. Saving of sound energy is directly concerned with an increased sound intensity in the working chambers 4. Saving of heat results in a higher liquid flow velocity and hence in an increased sound intensity, which in turn adds to the yield of white petroleum products.

According to an alternative embodiment of the present invention, the unit comprises a raw-stock processing device and end-products isolating device, both of them communicating with each other.

The raw stock processing device is in fact the aforedescribed ultrasonic activator. An ultrasonic activator 36 (FIG.6) communicates, through the outlet pipe connector 18, with the end-products isolating device which incorporates an appliance 37 for separating the processed medium into the liquid and the vapor phases, and an appliance 38 for condensing the vapor phase. Both of said appliances 37 and 38 may be of any heretofore-known construction aimed at similar purposes. For instance, the separating appliance 37 may appear as a vessel partly filled with the processed medium (omitted in the Drawings) preheated to the boiling point of the end product. The energy required for heating the mixture to the boiling point of the end product is released in the course of the cracking process. The void space of the vessel is for collecting the vaporous end product, which is then discharged to the condenser, while the rest of the liquid is returned, through the diffuser 13 (FIG.1) provided with the flow restrictor 17, to the ultrasonic activator for additional processing. The ultrasonic activator can be brought in communication with any additional device for a required aftertreatment depending on the purpose of the end product.

According to one more alternative embodiment of the present invention, the housing 1 (FIG.7) of the ultrasonic activator may accommodate the separating chamber 20 alone as described hereinbefore and communicating, through a discharge pipe connector 39, with any heretofore-known vapor condensing appliance, and through the outlet pipe connector 18 and the diffuser 13 having the flow restrictor 17, with the inlet 15 of the first impeller 8.

To choose any of the embodiments of the present invention depends on what an end product is desired.

The cracking unit of the present invention operates as follows.

Liquid raw stock is fed to the ultrasonic activator to be subjected to ultrasonic treatment with a radiation intensity of 1 - 10 MW/sq.m. A substance, such as water or mercury, which is capable of dispersing the raw stock under processing is fed to the ultrasonic activator simultaneously with said raw stock. A static pressure in the range of from 2.0 to 5.0 MPa (depending on the desired end product) is established and maintained in the ultrasonic activator by appropriately adjusting the rate of feed and discharge of the liquid under processing. The raw stock under processing is fed, through the inlet pipe connector 16 and the diffuser 13, to the first working chamber 4. While rotating, the drive shaft 5 sets in rotation the rotors 6 held thereto, which are in effect the impellers 8 of centrifugal pumps imparting energy to the raw stock being processed. After having been given said energy, the raw stock is discharged, at a definite rate proportional to the amount of energy imparted thereto, from the holes 10 in the ring 9 fixed rigidly on each rotor 6 and gets to the holes 12 in the ring 11 of the stator 7 held in place inside the housing 1 of the ultrasonic activator. With the rotor 6 rotating, the holes 10 in its ring 9 get alternately in register with the holes 12 in the ring 11 of the stator 7 and are covered by the webs (c) between the holes 12 in the ring 11 of the stator 7. Thus, a constant flow of liquid developed by the rotor 6 is transformed into a variable flow, and a variable pressure is established. After having left the working chamber 4, the raw stock gets to the vaned diffuser 13 along which it is transferred to the next working chamber 4, wherein the raw stock undergoes further ultrasonic treatment.

Thus, the raw stock under processing passes successively through all the working chambers 4 and is subjected to an intense ultrasonic treatment.

The processed raw stock is fed from the outlet of the last working chamber 4 through the tangential passages 23 to the separating chamber 20, wherein the processed raw stock is intensely separated, under the action of centrifugal forces, into the liquid phase of the intermediate products and the vapor phase of the end product. The liquid intermediates is discharged, through the outlet pipe connector 18 located in the peripheral portion of the separating chamber 20, the diffuser 13 provided with the flow restrictor 17, and outlet fittings, to the inlet of the first working chamber 4 for reprocessing. The vapor is discharged, through the central passages 25 and 30, to the cooling chamber 28 to be condensed there on the surface of the cooled elements 33 by virtue of centrifugal forces. Ultimately, the condensed end product is withdrawn through the discharge pipe connector 32 provided in the wall 31 of the cooling chamber 28.

When the ultrasonic activator, the appliance 37 for separating the processed raw stock into a liquid and a vapor phase, and the vapor-phase condensing appliance 38 are arranged according to a stand-apart layout, and when the separating chamber 20 alone is accommodated in the ultrasonic activator housing 1, the herein-proposed cracking unit operates as described hereinbefore.

Example 1

Producing, with the aid of the herein-proposed process, a gasoline fraction having an initial boiling point at 56°C and a final boiling point at 155°C, from vacuum gas oil having an initial boiling point at 350°C and a final boiling point at 500°C.

A mixture of vacuum gas oil and water (48 vol.% and 52 vol.%, respectively), is fed to the ultrasonic activator having two working chambers and capable of generating an ultrasonic radiation with an intensity of 5.3 MW/sq.m. A static pressure substantially equal to 1.0 MPa is built up in the processing zone. The temperature of the liquid being subjected to ultrasonic treatment is elevated up to 160°C due to the energy liberated during the cracking process. Then the processed liquid is separated into a liquid phase of intermediate products and a vapor phase of the desired end product.

Next the liquid intermediates are forwarded, along a closed recirculation circuit, for an additional ultrasonic treatment, while the vapor phase is condensed into the finished product.

Tabulated below are the data of twenty two Examples of producing white petroleum products from vacuum gas oil having an initial boiling point at 350°C and a final boiling point at 500°C. The process is carried into effect similarly to that described in Example 1.

Table

| Example No | Raw stock (vacuum gas oil), vol.% | Water, vol.% | Liquid metal (mercury), vol.% | Hydrogen, wt.% | Radiation intensity, MW/sq.m | Static pressure, MPa | Processing temperature, °C |
|---|---|---|---|---|---|---|---|
| 1 | 2 | 3 | 4 | 5 | 6 | 7 | 9 |
| 2 | 90 | 10 | – | – | 6.3 | 2.0 | 160 |
| 3 | 50 | 50 | – | – | 6.6 | 1.8 | 160 |
| 4 | 30 | 70 | – | – | 6.8 | 1.5 | 160 |
| 5 | 85 | 15 | – | – | 5.0 | 2.0 | 160 |
| 6 | 97 | 3 | – | – | 5.0 | 4.0 | 160 |
| 7 | 98 | 2 | – | – | 5.0 | 4.5 | 160 |
| 8 | 99.9 | 0.1 | – | – | 5.0 | 5.0 | 160 |
| 9 | 92 | 8 | – | – | 5.0 | 3.5 | 160 |
| 10 | 65 | 35 | – | – | 5.0 | 8.0 | 160 |
| 11 | 60 | 40 | – | 2 | 5.0 | 2.2 | 160 |
| 12 | 80 | 20 | – | 3 | 5.0 | 2.5 | 160 |
| 13 | 50 | – | 50 | – | 9.9 | 1.7 | 200 |
| 14 | 20 | – | 90 | – | 9.0 | 1.2 | 200 |
| 15 | 50 | – | 50 | 2.5 | 8.0 | 1.9 | 200 |
| 16 | 50 | – | 50 | – | 9.8 | 1.3 | 200 |
| 17 | 70 | 30 | – | – | 1.0 | 2.8 | 160 |
| 18 | 60 | 40 | – | – | 10.0 | 1.0 | 160 |
| 19 | 60 | 40 | – | – | 5.0 | 2.4 | 160 |
| 20 | 40 | 60 | – | – | 5.0 | 2.4 | 160 |
| 21 | 20 | 80 | – | – | 5.0 | 2.4 | 160 |
| 22 | 90 | 10 | – | – | 6.3 | 3.8 | 100 |
| 23 | 90 | 10 | – | – | 6.3 | 2.8 | 100 |

Table cont'd

| Ex-amp-le No | End product ini-tial boi-ling point, °C | End product fi-nal boi-ling point, °C | Ratio of end product hydrocarbon components, wt.% | | | | Yield of end pro-duct, % |
|---|---|---|---|---|---|---|---|
| | | | Para-ffin | Naph-thene | Aroma-tic | Unsa-tura-ted | |
| 1 | 9 | 10 | 11 | 12 | 13 | 14 | 15 |
| 2 | 38 | 162 | 48.16 | 40.71 | 11.01 | 0.12 | 96 |
| 3 | 87 | 168 | 47.18 | 42.35 | 10.20 | 0.17 | 90 |
| 4 | 72 | 161 | 42.78 | 43.15 | 14.02 | 0.05 | 93 |
| 5 | 40 | 164 | 54.30 | 38.50 | 7.02 | 0.18 | 93 |
| 6 | 42 | 161 | 53.95 | 36.82 | 9.02 | 0.21 | 92 |
| 7 | 32 | 162 | 52.81 | 40.37 | 6.67 | 0.15 | 96 |
| 8 | 35 | 163 | 53.11 | 40.75 | 5.89 | 0.25 | 92 |
| 9 | 41 | 164 | 55.30 | 36.29 | 8.12 | 0.29 | 96 |
| 10 | 45 | 178 | 51.80 | 39.88 | 8.00 | 0.32 | 98 |
| 11 | 35 | 162 | 46.51 | 38.95 | 13.26 | 1.28 | 98 |
| 12 | 33 | 160 | 48.75 | 41.44 | 9.47 | 0.34 | 98 |
| 13 | 29 | 201 | 8.61 | 28.17 | 63.13 | 0.09 | 99 |
| 14 | 27 | 206 | 10.74 | 29.33 | 59.75 | 0.18 | 99 |
| 15 | 28 | 200 | 7.95 | 27.29 | 64.65 | 0.11 | 96 |
| 16 | 29 | 201 | 8.15 | 30.03 | 61.61 | 0.21 | 99 |
| 17 | 38 | 162 | 53.15 | 36.35 | 10.17 | 0.33 | 94 |
| 18 | 24 | 148 | 31.78 | 34.50 | 33.53 | 0.19 | 97 |
| 19 | 29 | 164 | 54.27 | 35.80 | 9.68 | 0.25 | 93 |
| 20 | 31 | 167 | 50.75 | 37.12 | 11.83 | 0.30 | 92 |
| 21 | 49 | 172 | 43.45 | 39.70 | 16.46 | 0.09 | 90 |
| 22 | 35 | 156 | 54.10 | 36.15 | 9.30 | 0.45 | 91 |
| 23 | 28 | 130 | 53.05 | 40.50 | 5.94 | 0.51 | 90 |

An analysis of the abovestated Examples of practical embodiment of the proposed process demonstrates that use of the process and keeping its parameters in the limits specified above provides for as high yield of the end product as 90% and over.

Industrial Applicability

The present invention can find application in a variety of technological processes for producing and treating white petroleum products in order to attain as high yield thereof as 90% and over as a result of the cracking process.

**Claims**

1. A process for cracking petroleum and petroleum products, comprising feeding the raw stock to the processing zone, processing of said raw stock at a static pressure, followed by separating the thus-processed raw stock into a liquid phase and a vapor phase, and obtaining the end product from the vapor phase, CHARACTERIZED in that the raw stock is subjected to ultrasonic treatment in the processing zone with a radiation intensity of 1 - 10 MW/sq.cm, and a static pressure is maintained in a range of 2.0 to 5.0 MPa, a closed recirculation circuit being established in the processing zone, to which are fed, concurrently with the raw stock, also a dispersant in an amount of 0.1 - 80 vol.%, and a liquid phase resulting from the separation of the processed raw stock.

2. A process for cracking petroleum and petroleum products according to Claim 1, CHARACTERIZED in that water in an mount of 0.1 - 80 vol.% is fed to the processing zone as a dispersant.

3. A process for cracking petroleum and petroleum products according to Claim 1, CHARACTERIZED in that a liquid metal in an amount of 50 - 80 vol.% is fed to the processing zone as a dispersant, said liquid metal having a melting point below the boiling point of the desired end product.

4. A process for cracking petroleum and petroleum products according to Claim 2 or 3, CHARACTERIZED in that gaseous hydrogen in an amount of 2 - 3 wt.% is fed to the processing zone simultaneously with the raw stock.

5. A unit for carrying into effect the process for cracking petroleum and petroleum products, comprising a raw-stock processing device communicating with an end-products isolating device, CHARACTERIZED in that the raw-stock processing device is in fact an ultrasonic activator having a housing (1) accommodating at least two intercommunicating working chambers (4), each of said chambers accommodating a rotor (6) set on a drive shaft (5) and being in fact an impeller (8) of a centrifugal pump, said impeller having at its outlet a ring (9) rigidly fixed thereto and provided with holes (10) for the raw stock under processing to pass, and a stator (7) which is in fact a ring (11) provided with holes (12) for the raw stock under processing to pass, said stator ring being rigidly fixed in the activator housing (1) opposite to the ring (9) of the rotor (6), the width of the holes (10) in the ring (9) of the rotor (6) being equal to the width of the holes (12) in the ring (11) of the stator 7, and a total area of the holes (10) in the ring (9) of the rotor (6) is equal to a total area of the holes (12) in the ring (11) of the stator (7) and makes up 0.1 to 0.7 the area of an inlet (15) of the corresponding impeller (8), while the spacing of the holes (10, 12) in rings (9, 11) of the rotor (6) and the stator (7), respectively, equals 2 to 2.25 the width of said holes (10, 12); the first working chamber (4) has an inlet pipe connector (16), and all the working chambers (4) intercommunicate through diffusers (13) that interconnect an outlet (14) of the preceding impeller (8) to an inlet (15) of the next impeller (8), while the outlet (14) of the last impeller (8) is connected to the inlet (15) of the first impeller (8) through a diffuser (13) provided with a flow restrictor (17) and an outlet pipe connector (18) which is interposed between the flow restrictor (17) and the last impeller (8) so as to establish communication between the ultrasonic activator and the end-products isolating device, which is in fact an appliance (19, 37) for separating the processed raw stock into a liquid phase and a vapor phase, and an appliance (27, 38) for condensing the vapor phase.

6. A unit for carrying into effect the process for cracking petroleum and petroleum products according to Claim 5, CHARACTERIZED in that all the diffusers (13) are of the vaned and/or scroll volute type.

7. A unit for carrying into effect the process for cracking petroleum and petroleum products according to Claim 6, CHARACTERIZED in that the appliance (19) for separating the processed raw stock is enclosed in the housing (1) of the ultrasonic activator past the last working chamber (4) and appears as a separating chamber (20), an end wall (21) of a housing (22) of said chamber having tangential passages (23) communicating the chamber (20) with the last working chamber (4), a total area of said passages equalling 1 - 1.3 the total area of she holes (10) in the ring (9) of the rotor (6) of the last working chamber (4), while the central portion of an opposite end wall (24) of said chamber a passage (25) is provided, aimed at discharging the resultant vapor phase, said passage communicating with an appliance for condensing said vapor phase, while the outlet pipe connector (18) which communicates, through the diffuser (13) provided with the flow restrictor (17), the outlet (14) of the last impeller (8) with the inlet (15) of the first impeller (8), is located in a wall (26) of the peripheral portion of separating chamber (20).

8. A unit for carrying into effect the process for cracking petroleum and petroleum products according to Claim 7, CHARACTERIZED in that the vapor phase condensing appliance (27) is enclosed in the housing (1) of the ultrasonic activator past the separating chamber (20) and appears as a cooling chamber (28) having its end wall (29) provided with a central passage (30) which communicates said chamber with the separating chamber (20) and has a diameter that equals the diameter of the passage (25) of the separating chamber (20) and is equal to 0.5 - 1.5 the diameter of the inlet (15) of the impeller (8) of the last working chamber (4), while an outlet pipe connector (32) for the liquid end product to discharge is provided in an opposite end wall (31) of the cooling chamber (28) in the peripheral portion thereof.

9. A unit for carrying into effect the process for cracking petroleum and petroleum products according to Claim 5 or 8, CHARACTERIZED in that the external surface of the housing (1) of the ultrasonic activator is coated with a layer (34) of a sound- and heat-insulating material.

FIG.1

FIG.2

FIG.3

FIG.4

FIG.5

FIG.6

FIG. 7

# INTERNATIONAL SEARCH REPORT

**A. CLASSIFICATION OF SUBJECT MATTER**

Int. Cl.$^5$    C10G 15/00

According to International Patent Classification (IPC) or to both national classification and IPC

**B. FIELDS SEARCHED**

Minimum documentation searched (classification system followed by classification symbols)

Int. Cl.$^5$    C10G 15/00, C10G 15/08

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No |
|---|---|---|
| A | SU, A, 8242 (L.B. Cherri), 28 February 1929 (28.02.29) | 1,5 |
| A | SU, A1, 958471 (Irkutsky gosudarstvenny universitet im. A.A.Zhdanova), 15 September 1982 (15.09.82) | 1,4 |
| A | US, A, 3565787 (WILLIAM V. BAUER), 23 February 1971 (23.02.71) | 1,2 |
| A | US, A, 3819740 (SABURO HORI, IWAKI), 25 June 1974 (25.06.74) | 1 |
| A | GB, B, 1303823 (RESOURCES RESEARCH & DEVELOPMENT CORPORATION), 24 January 1973 (24.01.73) | 1,2 |

☐ Further documents are listed in the continuation of Box C.    ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 8 July 1993 (08.07.93) | 30 July 1993 (30.07.93) |

| Name and mailing address of the ISA/RU | Authorized officer: |
|---|---|
| Facsimile No | Telephone No |

Form PCT/ISA/210 (second sheet) (July 1992)